# EUROPÄISCHE PATENTANMELDUNG

(11) **EP 2 073 362 A2**
(43) Veröffentlichungstag der Anmeldung: **24.06.2009**
(21) Anmeldenummer: 08021861.3
(22) Anmeldetag: 17.12.2008
(51) Int. Cl.: H02K 41/03, H02K 16/00

(54) **Linearantrieb für Rotationsbewegungen**

(30) Priorität: 22.12.2007 DE 102007062385
(71) Anmelder: Robert Bosch GmbH, 70469 Stuttgart (DE)
(72) Erfinder: Gröning, Ingolf, 97816 Lohr am Main (DE)
(74) Vertreter: Thürer, Andreas

(57) **Zusammenfassung**

Die Aufgabe der Erfindung besteht darin einen Spezielantrieb für Werkzeugmaschinenrundtische zu konstruieren.

Die Erfindung löst diese Aufgabe mittels eines neuartigen rotativen Servoantriebes, welcher mittels Linearmotorkomponenten 1,3 realisiert ist sowie mittels eines Verfahrens zur Herstellung eines solchen neuartigen Antriebs.

Die Wirtschaftlichkeit und Anwendbarkeit der erfindungsgemäßen Lehre ist bei Maschinen mit hohen Anforderungen bezüglich des Drehmomentes größer als bei herkömmlichen aus dem Stand der Technik bekannte Lösungen, beispielsweise bei Torquemotoren.

## Beschreibung

Die Erfindung betrifft eine elektrische Einrichtung, insbesondere eine elektrische Maschine, insbesondere einen Servoantrieb zur Erzeugung einer Rotationsbewegung sowie ein Verfahren zur Herstellung der Einrichtung gemäß den unabhängigen Ansprüchen.

Servoantriebe sind aus dem Stand der Technik bekannt und werden, kombiniert mit geeigneter Steuerelektronik (z.B. Servoverstärker und Servoumrichter), in zunehmendem Umfang dort eingesetzt, wo Drehzahlen beim Hochlaufbetrieb und/oder beim Bremsbetrieb von anzutreibenden Vorrichtungen kurzzeitig zu verändern sind. Servomotoren lassen sich in wenigen Millisekunden aus dem Stillstand auf ihre Nenndrehzahl beschleunigen, in der selben Zeit abbremsen und bezüglich ihrer Drehrichtung umsteuern. Sie werden als hochdynamische, beschleunigungsoptimierte Antriebsmaschinen zur Regelung von Winkeln, Lagen und Wegen eingesetzt. Beim Verfahren von Wegen arbeiten sie im kontinuierlichen Rundlaufbetrieb und für Positionieraufgaben mit hohem Auflösungsvermögen für die Winkellage. Anwendungsbereiche liegen beispielsweise bei Rundtischantrieben für numerisch gesteuerte Werkzeugmaschinen. Eigenschaften von Servomotoren sind unter anderem: höchste Dynamik, große Winkelbeschleunigung, guter Rundlauf auch bei kleinen Drehzahlen, hohe Drehzahlsteifigkeit, hohe Überlastbarkeit, gute Positioniergenauigkeit und die Einsatzmöglichkeit im Vierquadrantenbetrieb.

Servodirektantriebe, welche ohne kuppelnde oder übertragende Elemente eine Last antreiben, sind ebenfalls aus dem Stand der Technik bekannt. Hierbei kann es sich um rotationssymmetrische Antriebe, beispielsweise um Synchrontorqueantriebe oder um Linearantriebe handeln. Auch bei Werkzeugmaschinen kommen Direktantriebe zum Einsatz, beispielsweise bei der Material abtragenden Bearbeitung, bei der Werkzeugpositionierung oder bei der Werkstückpositionierung. Während zur Werkzeugpositionierung überwiegend Linearantriebe verwendet werden, kommen bei der Werkstückpositionierung beispielsweise Spindelmotoren zum Einsatz, welche mittels Riemen oder Getriebe einen Rundtisch antreiben, auf welchem ein Werkstück angeordnet ist.

Diese Lösung hat unter anderem den Nachteil, dass die Riemen nachgiebig und verschleißbehaftet sind. Außerdem erfolgt beim Riemenantrieb oder beim Antrieb mittels beispielsweise einer Stirnverzahnung und Getriebe keine direkte Drehmomentübertragung, welche am Drehpunkt des zu bewegenden Objektes angreift, sondern eine indirekte Drehmomentübertragung. Nachteilig dabei sind beispielsweise die zusätzlichen Aufwände hinsichtlich der Mechanik, der Montage und natürlich der daraus resultierenden Kosten.

Zur Realisierung einer direkten Drehmomentübertragung in Verbindung mit Rundtischen werden überwiegend Torquemotoren eingesetzt, weil diese ein hohes Moment direkt auf den Tisch übertragen können. Durch den Torquemotor kann somit die Genauigkeit, die Geschwindigkeit und die Dynamik während des Betriebes der Werkzeugmaschine erhöht werden.

Möchte man als Hersteller von Direktantrieben für Rundtische auch Sonderwünsche von Kunden bedienen, so kann man schnell an fertigungstechnische und/oder wirtschaftliche Grenzen stoßen, was die Herstellung der Torquemotorkomponenten betrifft. Sofern es sich um Direktantriebe für Sonderzwecke mit geringen Stückzahlen handelt, wäre außerdem zu berücksichtigen, dass die Anschaffungskosten für spezielle Maschinen schnell den beim Verkauf des Spezialdirektantriebes erzielten Gewinn wieder zunichte machen können, da entsprechende Werkzeugmaschinen mehrere hunderttausend Euro in der Anschaffung kosten können, was sich bei geringen Stückzahlen für Sondermodelle definitiv nicht lohnt.

Die europäische Patentschrift EP 1129847 B1 der Anmelderin betrifft einen elektrischen Antrieb für den Zylinder einer Druckmaschine, mit einem Stator und einem auf der Achse des Zylinders sitzenden Rotor. Insbesondere befasst sich die Erfindung mit einem Antrieb für einen sogenannten Zentralzylinder einer Druckmaschine, beispielsweise den Gegendruckzylinder einer Flexodruckmaschine, der einen relativ großen Durchmesser aufweist und an dessen Umfang mehrere Farbwerke angestellt sind. Die Aufgabe wird erfindungsgemäss dadurch gelöst, dass der Stator sich nur über einen Teil des Umfangs des Rotors erstreckt und mit diesem einen Linearantrieb bildet. Damit sich der Stator nur über einen Teil des Umfangs des Rotors erstrecken kann ist dieser gabelförmig realisiert, d.h. es handelt sich um eine spezielle Konstruktion, die nicht mit Standard-Linearmotorkomponenten realisiert wurde. Auch hier ergeben sich daher ähnliche Nachteile, wie bei der theoretisch möglichen Verwendung von Torquemotoren mit überdurchschnittlich großen Durchmessern im Bereich zwischen 50 - 100 Zentimeter oder mehr.

Es ist die Aufgabe der vorliegenden Erfindung einen Antrieb für Werkzeugmaschinenrundtische zu konstruieren, der möglichst unabhängig von der Rundtischgröße einfach und preiswert zu realisieren ist.

Die Erfindung löst diese Aufgabe mittels einer Einrichtung, insbesondere einer elektrischen Maschine, insbesondere mittels eines neuartigen Synchron-Servo (linear) antriebes, welcher mittels Linearantriebskomponenten eine Rotationsbewegung erzeugen kann. Zur Realisierung einer solchen neuartigen Einrichtung wird zumindest ein erstes Linearmotorteil auf einer ersten Kreisbahn angeordnet und zumindest ein zweites Linearmotorteil auf einer zweiten Kreisbahn angeordnet, wobei zumindest ein Linearmotorteil derart relativ beweglich gegenüber dem jeweils anderen Linearmotorteil angeordnet ist, dass die erste . Linearmotorteiloberfläche der zweiten Linearmotorteiloberfläche zugewandt sein kann. Die Anordnung der Linearmotorteile erfolgt vorzugsweise auf Linearmotorteilträgern, welche nicht unbedingt Bestandteil der erfindungsgemäßen Anordnung sein müssen. Beispielsweise wäre es möglich eine mittels der erfindungsgemäßen Lösung anzutreibende Vorrichtung als Linearmotorteilträger zu verwenden, unter der Voraussetzung, dass diese hierfür geeignet ist. Es wäre aber auch möglich separate und von der erfindungsgemäßen Maschine umfasste Linearmotorteilträger vorzusehen. Die erfindungsgemäße Lehre wäre dann derart zu verstehen, dass zumindest ein erstes Linearmotorteil auf einer ersten Kreisbahn an einem ersten Linearmotorteilträger angeordnet wird und zumindest ein zweites Linearmotorteil auf einer zweiten Kreisbahn an einem zweiten Linearmotorteilträger angeordnet wird. Zumindest einer der Linearmotorteilträger wird derart relativ beweglich gegenüber dem jeweils anderen Linearmotorteilträger angeordnet, dass die das erste Linearmotorteil umfassende erste Linearmotorteilträgeroberfläche der das zweite Linearmotorteil umfassenden zweiten Linearmotorteilträgeroberfläche zugewandt ist. Im Rahmen der folgenden Erläuterungen wird unter dem Begriff Linearmotorteilträger oder Linearmotorteilträgeroberfläche entweder die Vorrichtung selbst beziehungsweise deren Oberfläche oder ein separater, von der Einrichtung umfasster Linearmotorteilträger beziehungsweise dessen Oberfläche verstanden.

Die Linearmotorteile (Sekundärteil und/oder Primärteil) sind auf den jeweiligen Linearmotorteilträgen montiert und können je nach Lage und Anzahl der verwendeten Linearmotorteile und momentaner relativen Lage zueinander gegenüberliegend oder gegenüberliegend verschoben angeordnet sein. Die Linearmotorteilträger liegen sich im wesentlichen derart gegenüber, dass ihre Oberflächen parallel zueinander ausgerichtet sind. Bewegt sich der beweglich angeordnete Linearmotorteilträger, so entsteht automatisch eine Relativbewegung nicht nur zwischen den Linearmotorteilträgern, sondern auch zwischen den Linearmotorteilen. Die Linearmotorteile sind vorzugsweise am äußeren Umfang der Träger angeordnet, um ein möglichst hohes Drehmoment zu erhalten.

Ein Verfahren zur Herstellung einer erfindungsgemäßen elektrischen Maschine umfasst folgende erfindungsgemäße Verfahrensschritte: 1. Definition einer ersten Kreisbahn auf einer Linearmotorteilträgeroberfläche des ersten Linearmotorteilträgers und Anordnung zumindest eines ersten Linearmotorteiles auf dieser ersten Kreisbahn am ersten Linearmotorteilträger. 2. Definition einer zweiten Kreisbahn auf einer zweiten Linearmotorteilträgeroberfläche des zweiten Linearmotorteilträgers und Anordnung zumindest eines zum ersten Linearmotorteil korrespondierenden zweites Linearmotorteiles auf dieser zweiten Kreisbahn am zweiten Linearmotorteilträger. 3. Anordnung beider Linearmotorteilträgerteile relativ zueinander derart, dass die das erste Linearmotorteil umfassende erster Linearmotorteilträgeroberfläche des ersten Linearmotorteilträgers der das zweite Linearmotorteil umfassenden zweiten Linearmotorteilträgeroberfläche des zweiten Linearmotorteilträgers zugewandt ist und zumindest ein Linearmotorteilträger beweglich angeordnet wird. Die Nummerierung 1-3 ist nicht als Rangfolge zu betrachten. Die Schritte könnten auch in anderer Reihenfolge erfolgen.

Die erfindungsgemäße Lehre (Einrichtung) könnte auch zur Realisierung eines Generators zur Erzeugung elektrischer Energie aus einer mechanischen Rotationsbewegung verwendet werden, insbesondere in Verbindung mit einem rückspeisefähigen Regelgerät und unter Berücksichtigung der beim Betrieb entstehenden harmonischen Schwingungen mit dem Ziel eine möglichst sinusförmig verlaufende Grundwelle zu generieren. Da jedoch die erfindungsgemäße Lösung in erster Linie für ein antriebsspezifisches Problem entwickelt wurde, wird im Folgenden in erster Linie von der Funktion als Antrieb gesprochen. Dies ist jedoch nicht so zu verstehen, dass die erfindungsgemäße Lehre ausschließlich auf Antriebe einzuschränken wäre.

Vorteilhaft bei der erfindungsgemäßen Lösung gegenüber der aus dem Stand der Technik bekannten Lösung in Verbindung mit Torquemotoren ist, dass die Erzeugung eines hohen Drehmomentes mittels einer am äußeren Rand des beweglich angeordneten Linearmotorteilträgers wirkenden Tangentialkraft möglich ist, welches vergleichbar mit dem mittels Torquemotoren identischen Durchmessers erzielten Drehmomentes. Allerdings ermöglicht die erfindungsgemäße Lehre eine weitaus flexiblere und preiswertere Lösung. Unter Verwendung von preiswerten Standardkomponenten (gerade/gekrümmte Primärteile/Sekundärteile) können Kreisbahnen mit theoretisch beliebigem Durchmesser realisiert werden, ohne dass Spezialmaschinen erforderlich wären.

Bei Verwendung von Torquemotoren zur Realisierung von Antrieben mit unüblich großen Querschnitten wäre dagegen im ungünstigsten Falle die Anschaffung einer neuen Drehmaschine erforderlich, welche in der Lage ist die Komponenten der Torquemotoren herzustellen. Diese Lösung ist unflexibel, weil Drehmaschinen nicht beliebig skalierbar sind und sehr kostenintensiv sind. Die Erfindung führt demnach zur Einsparung der Fertigungskosten und der Anschaffungskosten für Spezialmaschinen bei der Herstellung von Antrieben für Werkzeugmaschinen. Auch die Lagerhaltung der einzelnen Einrichtungskomponenten gestaltet sich bei der erfindungsgemäßen Lösung einfacher, da meist ohnehin vorhandene Standardkomponenten logistisch einfacher zu verwalten sind. Die Wirtschaftlichkeit und Anwendbarkeit der erfindungsgemäßen Lehre für einen Motorenhersteller nimmt mit der Größe des geforderten Querschnittes der zu realisierenden Maschine zu, während sich dies bei Verwendung vom aus dem Stand der Technik bekannten Prinzipien im wesentlichen konträr verhält.

Weitere Ausgestaltungsformen der Erfindung ergeben sich aus den abhängigen Ansprüchen.

Bevorzugt werden beide Linearmotorteilträger insbesondere flächig, vorzugsweise kreisförmig ausgebildet und weisen einen gemeinsamen geometrischen Mittelpunkt auf, wobei an diesem geometrischen Mittelpunkt der Drehpunkt für zumindest einen beweglich gelagerten Linearmotorteilträger vorgesehen ist. Diese Art der Realisierung hat den Vorteil, dass die Linearmotorteilträger als Aufnehmer für eine anzutreibende Vorrichtung beziehungsweise als Anschlussflansch für den Zweck der Montage beispielsweise als Anschlussflansch dienen können.

Besonders bevorzugt sind das erste Linearmotorteil und das zweite Linearmotorteil jeweils im wesentlichen rechteckförmig ausgebildet. Es können somit Standardkomponenten (Linearmotorbausätze) ohne Modifikationen verwendet werden. Die Standardkomponenten dienen quasi als Bausatz für den Antrieb und sind bei einem Motorenhersteller in der Regel ohnehin vorrätig oder leicht zu beschaffen, so dass ein Zusatzaufwand bei der Herstellung und/oder zusätzliche Lagerhaltungskosten entfallen können.

Alternativ kann das erste Linearmotorteil im wesentlichen ringförmig oder im wesentlichen als Ringabschnitt und das zweite Linearmotorteil im wesentlichen rechteckförmig ausgebildet sein. Als zweite Alternative könnte das erste Linearmotorteil im wesentlichen rechteckförmig und das zweite Linearmotorteil im wesentlichen ringförmig oder im wesentlichen als Ringabschnitt ausgebildet ist. Als dritte Alternative könnte das erste Linearmotorteil und das zweite Linearmotorteil jeweils im wesentlichen ringförmig oder im wesentlichen als Ringabschnitt ausgebildet sein. Mittels dieser Alternativen können zum einen ohnehin vorhandene Lagerbestände optimal genutzt werden, als auch optimierte Lösungen bezüglich des Kraftflusses und damit ein optimiertes Drehmoment bei der Konstruktion erarbeitet werden.

Das erste Linearmotorteil umfasst einen elektrisch aktiven Bereich (z.B. Spulenträgerbereich), wobei das zweite Linearmotorteil einen elektrisch passiven Teil umfasst und dort magnetische Pole, vorzugsweise Permanentmagnete (z.B. NeFeB), trägt. Aufgrund der gegebenenfalls modifizierbaren örtlichen Lage der aktiven/passiven Teile an den Linearmotorteilen lasse sich Drehmoment und Betriebscharakteristika durch geometrische Veränderungen weiter optimieren.

Besonders bevorzugt sind entlang zumindest einer Kreisbahn mehrere Linearmotorteile jeweils paarweise im wesentlichen diametral angeordnet. Gegebenenfalls vorhandene Winkelfehler und dadurch bedingte Radialkräfte, welche auf das Lager des drehbaren Trägers wirken könnten, können somit ausgeglichen werden, weil sie sich im wesentlichen zu Null aufsummieren. Dadurch resultiert eine Entlastung der mechanischen Lager der Anordnung. Der Begriff des Winkelfehlers wird im Rahmen, der Figurenbeschreibung nochmals aufgegriffen und dann tiefgreifender erläutert.

Außerordentlich bevorzugt liegt der geometrische Mittelpunkt des zuvor bereits erläuterten und vorzugsweise im wesentlichen rechteckigförmig ausgestalteten elektrisch aktiven Bereiches auf der Kreisbahn. Bei der Herstellung der Maschine muss möglichst penibel darauf geachtet werden, dass der geometrische Mittelpunkt des vorzugsweise im wesentlichen rechteckigförmigen elektrisch aktiven Bereiches möglichst exakt auf der der Kreisbahnen angeordnet wird. Auch hierdurch kann erreicht werden, dass sich vorhandene Winkelfehler und damit die Radialkräfte, welche an einem Linearmotorprimärteil (Spulenträger) und/oder einem Linearmotorsekundärteil (Magnetbahn) wirken können, im wesentlichen zu Null aufsummieren.

Zur Erhöhung der Flexibilität im Rahmen der Konstruktion und bei der Dimensionierung der Ansteuerung der mittels der erfindungsgemäßen Lösung realisierten Anordnung kann eine gerade und/oder eine ungerade Anzahl von Linearmotorteilen an den Linearmotorteilträgern vorgesehen werden, wodurch vielfältige Realisierungsmöglichkeiten gewährleistet sind.

Die Polteilung τρ [mm] wird unter Berücksichtigung der Kreisbahn, auf welcher der geometrische Mittelpunkt des elektrisch aktiven Bereiches liegt, dimensioniert. Der Zahlenwert von τρ entspricht dem Abstand unmittelbar benachbarter Pole unterschiedlicher Polarität in Millimeter, d.h. dem Abstand zwischen unmittelbar benachbartem Nordpol und Südpol (elektrisch 180 Grad). Die Erkenntnis über diesen Zusammenhang erleichtert die Auslegung der Ansteuerung der Einrichtung und die damit verbundenen Auswahl von Regelgeräten zur Ansteuerung der Einrichtung. Mehrere einzelne aktive Linearmotorteile (z.B. Primärteil) können mittels eines einzigen Reglers angesteuert werden, sofern dieser Regler die erforderliche Leistung abgeben kann, wenn gleiche Primärteile verwendet werden und wenn der korrekte Abstand zwischen den Primärteilen gewählt wird. Sind diese Anforderungen nicht gegeben, so sind je nach Anzahl der Linearmotorteile (Primärteile) mehrere Regler erforderlich, um die gewünschte Bewegung zu erzeugen. Dies führt natürlich wieder zu einem Mehraufwand bei Konstruktion, Montage und Instandhaltung und damit zu höheren Kosten.

Bevorzugt umfasst der Antrieb einen Pollagesignalgeber (Feedback) zur Realisierung einer Selbststeuerung mittels Feldführung, welcher pro 360 Grad elektrischer Drehung eine Anzahl von wenigstens drei, vier, fünf, sechs, sieben, acht oder neun, vorzugsweise jedoch aber zehn oder mehr Impulse pro verwendetem Polpaar p liefert. Ein Polpaar p besteht dabei aus zwei benachbarten Polen unterschiedlicher Polarität, welche mit τρ beabstandet sind. Idealerweise werden pro 360° elektrischer Drehung mindestens 10 Striche zur Verfügung gestellt, da dann eine möglichst gleichförmige harmonische Bewegung realisiert werden kann. Das Minimum bei Blockkommutierung beispielsweise mittels Hallsensoren liegt bei 3 Stichen. Somit ist als Minimum sinnvoll: Strichzahl des Pollagesignalgebers (Feedback) größer oder gleich 3 * p (p = Polpaaranzahl). Für eine möglichst gleichförmige Bewegung sinnvoll ist die Strichzahl größer oder gleich 10 * p (p = Polpaarzahl) zu wählen.

Besonders bevorzugt umfasst eine Vorrichtung für eine Werkzeugmaschine, insbesondere ein Rundtisch, eine erfindungsgemäße als Antrieb konzipierte Einrichtung. Der Antrieb umfasst insbesondere zumindest ein Mittel zur Anordnung des Antriebs an der Werkzeugmaschine, beispielsweise in Form eines Anschlussflansches. Dieser Rundtisch ist vorzugsweise wiederum von einer Werkzeugmaschine umfasst. Es strahlen somit alle bereits genannten Vorteile auch auf den mittels der erfindungsgemäßen Einrichtung realisierten Rundtische oder der mittels des Rundtisches realisierten Werkzeugmaschine aus.

Vorteilhafterweise werden die sich gegenüber liegenden Linearmotorteile mit einem Schutzmittel, beispielsweise mit einer (Metall-) Abdeckvorrichtungen und/oder mit Vergussmassen (Epoxydharz o.ä), gegen äußere Umgebungseinflüsse versehen bzw. versiegelt. Auch unter widrigen Bedingungen ist somit ein sicherer Betrieb stets gewährleistet.

Im Rahmen der nachfolgenden Figurenbeschreibungen werden nun weitere Aspekte der Erfindung beispielhaft und schematisch erläutert. Auf detaillierte Zeichnungen zur Darstellung konstruktiver Details wurde bewusst verzichtet, da hier lediglich das erfindungsgemäße Prinzips erläutert werden soll. Es handelt sich bei den nachfolgend erläuterten Erfindungsaspekten lediglich um Ausführungsbeispiele, welche fachmännisch weiter ausgebildet weiden können und sollten.

Figur 1 zeigt den Stand der Technik in Form eines Rundtischantriebes.

Figur 2 zeigt den Schnitt durch einen Innenläufer zum Antrieb eines Rundtisches (Stand der Technik).

Figur 3 zeigt diametral angeordnete erfindungsgemäße Linearmotorteile.

Figur 4 zeigt die Detaildraufsicht auf ein erfindungsgemäßes Linearmotorprimärteil und Linearmotorsekundärteil und veranschaulicht den bei der erfindungsgemäßen Lösung möglicherweise auftretenden Winkelfehler, den es weitestgehend zu kompensieren gilt.

Figur 5 zeigt ein Kreissegment mit einzelnen Primärteilen und einem ringförmigen Sekundärteil.

Figur 6 zeigt ein Kreissegment mit einzelnen Primärteilen und einzelnen Sekundärteilen.

Figur 7 zeigt einen Querschnitt von einem erfindungsgemäßen Rundtisch.

Das Sekundärteil (z.B. elektrisch passive Magnetbahn) ist bei den betrachteten Ausführungsformen jeweils am beweglichen Linearmotorteilträger angeordnet. Das Primärteil (z.B. elektrisch aktiver Spulenträger) ist jeweils am ortsfesten Linearmotorteilträger angeordnet. Die Anordnung des Primärteils und des Sekundärteils könnte jeweils auch vertauscht erfolgen. Wegen der erforderlichen Zuleitungen ist das elektrisch aktive Primärteil jedoch bevorzugt ortsfest realisiert.

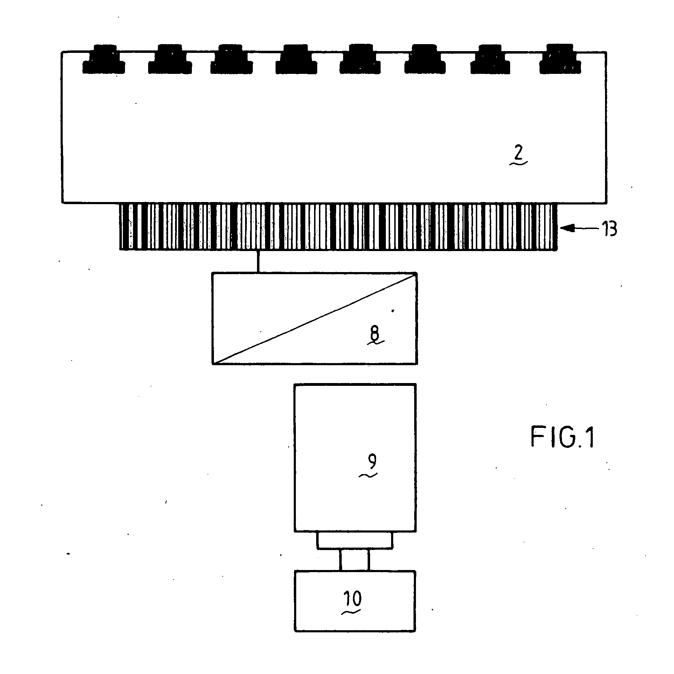

Der in Figur 1 gezeigte Rundtisch 2 arbeitet mittels eines Getriebes 8 und eines Synchronmotors 9, welcher einen Inkrementalgeber 10 zum Zwecke der Kommutierung mittels einer Steuerung umfasst. Diese Realisierungsform umfasst eine Vielzahl von Einzelkomponenten.2,8,9,10,13, welche separat hergestellt und aufeinander abgestimmt sein müssen. Der Montageaufwand steigt mit der Anzahl der Komponenten 2,8,9,10,13. Die Kraftübertragung zwischen Getriebe 8 und Rundtisch 2 erfolgt mittels einer am Rundtisch 2 angeordneten Stirnverzahnung 13 und mittels eines am Getriebe 8 angeordneten Zahnrades (nicht gezeigt). Alternativ wäre auch ein Riemenantrieb denkbar. Die Nachteile beider aus dem Stand der Technik bekannten Varianten wurden bereits Eingangs beschrieben.

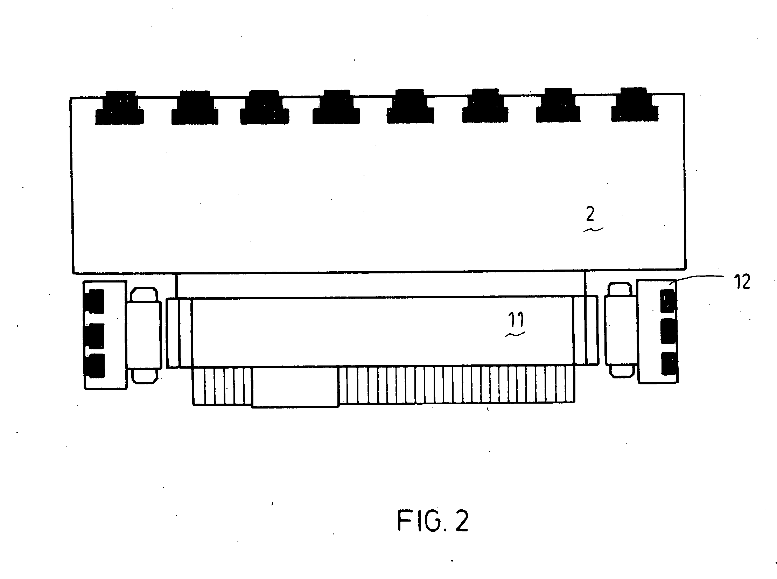

Eine Weiterentwicklung der in Figur 1 gezeigten Lösung ist in Figur 2 dargestellt. Figur 2 zeigt einen mittels Torquemotor (Innenläuferprinzip: Der Rotor 11 ist mit dem Rundtisch 2 fest verbunden) angetriebenen Rundtisch 2. Im Detail sind hier ist der Tisch 2, der Rotor 11 und der Stator 12 gezeigt. Der Nachteil dieser Lösung liegt in erster Linie darin, dass zur Herstellung des Motors spezielle Maschinen erforderlich sind, welche nicht auf beliebige Motordimensionen skalierbar sind. Besonders die Herstellung des Stators 12 und/oder des Rotors 11 wird mit zunehmenden Forderungen bezüglich der Durchmesser kostspielig. Sonderlösungen für Einzelkunden sind dementsprechend unwirtschaftlich für den Motorhersteller.

Es sei hier bemerkt, dass ein Rundtisch 2 nicht zwangsläufig auch aus einer runden Platte 2 bestehen muss. Der Rundtisch 2 kann entgegen seiner Bezeichnung durchaus auch eine im wesentlichen rechteckige oder sonstige geometrische Form haben. Die Form muss jedoch dazu geeignet sein ein Werkstück zu tragen. Üblicherweise sind die gewählten Formen jedoch aufgrund der mit der Bearbeitung des Werkstückes oftmals vorhandenen Rotationsbewegungen im wesentlichen rund.

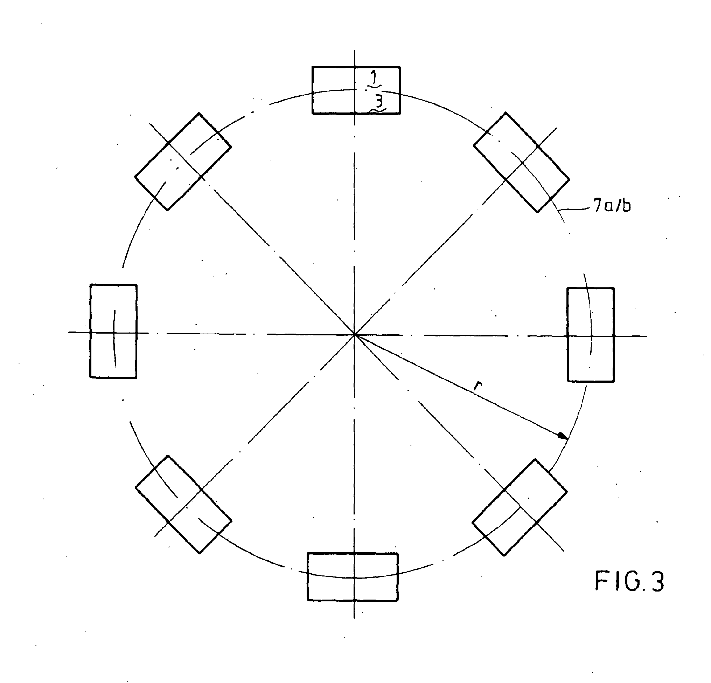

Figur 3 zeigt erfindungsgemäße Linearmotorteile 1 oder 3. Die Figur könnte sowohl die Anordnung der Sekundärteile 3, als auch die Anordnung der Primärteile 1 zeigen. Der Radius r zur Realisierung der Kreisbahnen 7a,b wäre vorzugsweise sowohl für erste 1 innerhalb einer ersten Ebene 2 angeordnete als auch für zweite 3 innerhalb einer zweiten Ebene 4 angeordnete Linearmotorteile 1,3 im wesentlichen identisch zu wählen. Es könnte sich demnach bei dieser Darstellung sowohl um die Draufsicht auf den ersten Linearmotorteilträger (nicht gezeigt), als auch um die Draufsicht auf den zweiten Linearmotorteilträger (nicht gezeigt) aus Sicht der Linearmotorteile 1,3 handeln. Entweder dieses oder das gegenüberliegende Linearmotorteilträgerteil ist relativ beweglich gegenüber dem jeweils anderen Linearmotorteilträger (nicht gezeigt) angeordnet, so dass die Linearmotorteile 1,3 an den jeweiligen Linearmotorteilträgeroberflächen einander zugewandt sein können. Entlang einer Kreisbahn 7a,b sind jeweils mehrere gleichartige Linearmotorteile 1,3 jeweils paarweise im wesentlichen diametral angeordnet.

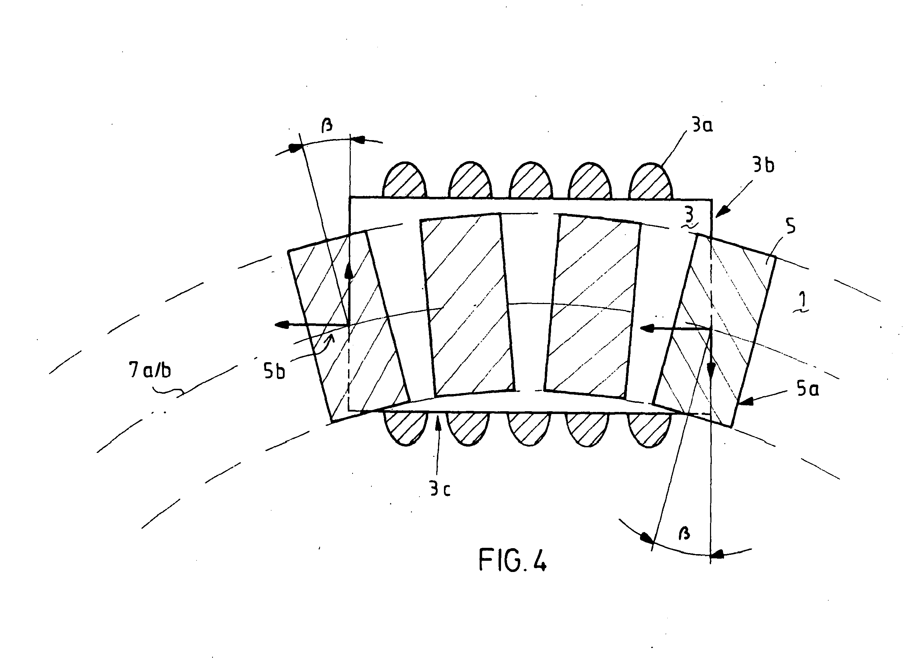

Figur 4 zeigt die Detaildraufsicht auf ein erfindungsgemäßes erstes Linearmotorprimärteil 3 mit Wicklungen 3a beziehungsweise auf ein erfindungsgemäßes Linearmotorsekundärteil 1 mit Permanentmagneten 5 mit Kante 5a und Symmetrieachse 5b. Die in diesem Ausführungsbeispiel gezeigten Linearmotorprimärteile 1,3 sind auf einem Linearmotorteilträger (aus Gründen der Übersichtlichkeit nicht gezeigt) fest montiert. Die Linearmotorteilträger wiederum sind an einer Werkzeugmaschine fest angeordnet (ebenfalls aus Gründen der Übersichtlichkeit nicht gezeigt). Weitere Linearmotorprimärteile 1,3 können entlang einer Kreisbahn 7a,b auf den Linearmotorträgern verteilt sein (nicht gezeigt). Das erste Linearmotorprimärteil 3 ist wegen der umfassten Wicklungen 3a elektrisch aktiv und umfasst damit einen aktiven Bereich (von den Wicklungen durchdrungener Primärteilkörper), dessen geometrischer Mittelpunkt auf einer ersten Kreisbahn 7a angeordnet ist. Unmittelbar über dem ersten Linearmotorprimärteil 3 ist ein bogenförmiges zweites Linearmotorsekundärteil 1 mit Permanentmagneten 5 auf einer zweiten Kreisbahn 7b angeordnet (im wesentlichen derselbe Durchmesser wie der der ersten Kreisbahn 7a), auf dem die geometrischen Mittelpunkte der unmittelbar darunter liegenden zuvor bereits genannten aktiven Teile angeordnet sind. Die Anordnung könnte auch umgekehrt realisiert sein, d.h. ein bogenförmiges erstes Linearmotorprimärteil 3 könnte mit einem rechteckförmigen zweiten Linearmotorsekundärteil 1 zusammenwirken oder das Primärteil 3 könnte beweglich statt ortsfest und das Sekundärteil 1 könnte ortsfest statt beweglich angeordnet sein.

Weil die Kanten 5a der Sekundärteilmagnete 5 nicht parallel zu den Kanten des Primärteiles 3b ausgerichtet sind, entsteht ein Winkelfehler β, der sich abhängig vom Radius der Anordnung und der Lage der Permanentmagnete 5 relativ zum Primärteil 3 ändert. Je größer der Radius des der Dimensionierung der Anordnung zugrundeliegenden Kreises (siehe Kreisringabschnitt 7a,b in Figur 4), desto vernachlässigbarer, weil geringer, wird der Winkelfehler β. Umgekehrt nimmt der Winkelfehler β mit abnehmendem Radius r zu, weil die Kantenparallelität stark abnimmt und damit die Kraftanteile in Bewegungsrichtung ebenfalls. Da die Erfindung bei im Vergleich mit aus dem Stand der Technik bekannten Anordnungen in erster Linie vorzugsweise bei sehr großen Radien zum Einsatz kommt, kann von vorneherein von einem sehr kleinen Winkelfehler β ausgegangen werden. Hinzu kommt, dass sich der Winkelfehler β bei erfindungsgemäßer Anordnung kompensiert. Unbedingte Voraussetzung dabei ist jedoch, dass bei der Konstruktion der erfindungsgemäßen Anordnung berücksichtig wird, dass das Primärteil 3 einen elektrisch aktiven Bereich umfasst (siehe Erläuterung weiter oben), dessen geometrischer Mittelpunkt auf der ersten Kreisbahn 7a angeordnet werden muss. Weiter muss diese erste Kreisbahn 7a mit der Symmetrieachse 5b der auf dem Sekundärteil 1 angeordneten Permanentmagnete 5 im wesentlichen bzw. annähernd zusammenfallen. Die Symmetrieachse 5b der Permanentmagnete 5 stellt quasi eine Tangente an einen der Kreisbögen 7a,b dar.

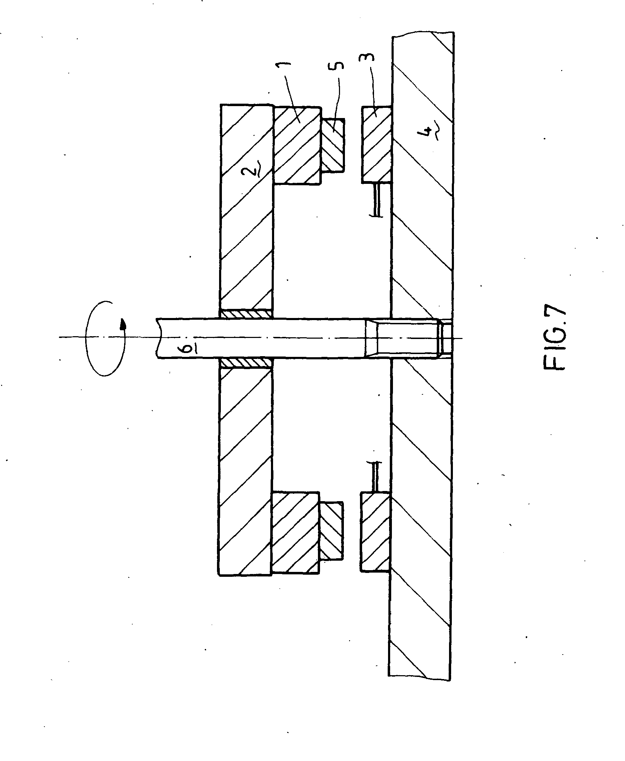

In Figur 4 sind auch die Kraftkomponenten (Pfeile) der resultierenden Kraftkomponente (nicht eingezeichnet) gezeigt, welche auf das Sekundärteil 1 einwirken. Es ist deutlich zu sehen, dass sich die im wesentlichen parallel zu einer ersten Primärteilkante 3c ausgerichteten Kraftkomponenten in Bewegungsrichtung in Summe überlagern und dass sich die senkrecht zu dieser Kraftkomponente (senkrecht zur Bewegungsrichtung) im wesentlichen parallel zu einer zweiten Primärteilkante 3b verlaufenden Kraftkomponenten in Summe im wesentlichen kompensieren. Hierdurch kompensiert sich gleichzeitig der Winkelfehler β ebenfalls im wesentlichen, welcher eine radiale Zusatzkraft auf den zentralen Drehpunkt des beweglich angeordneten Linearmotorträgerteils bewirken würde, was zu einer übermäßigen Belastung der Lager an der Drehachse (6, siehe Figur 7) führen könnte. Die Permanentmagnete 5 in Figur 4 wurden bewusst aus Gründen der Übersichtlichkeit ohne Träger gezeigt. Beispiele für mögliche Trägervarianten findet der Leser im Rahmen der nachfolgenden Figurenbeschreibungen.

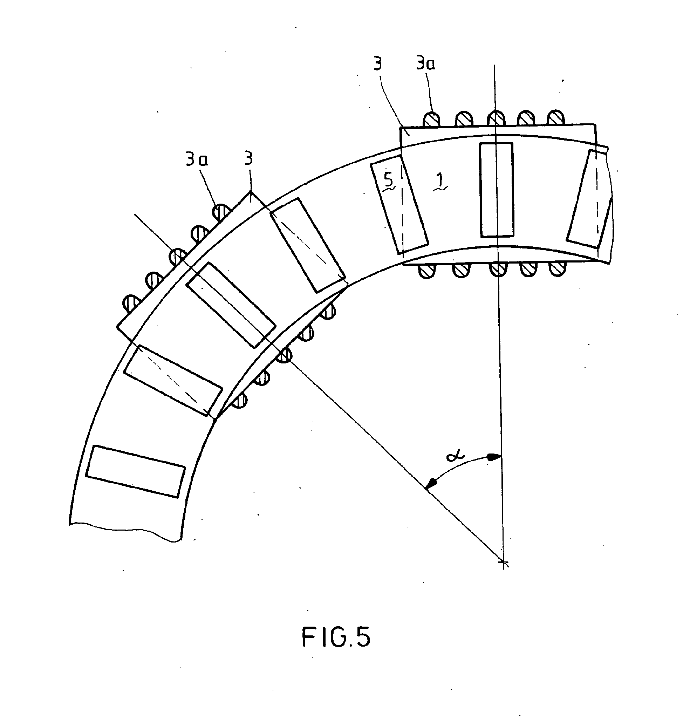

Die Figur 5 zeigt im Prinzip einen Detailausschnitt der aus der Figur 4 bereits bekannten schematischen Anordnung. Bei der in Figur 5 gezeigten Lösung wurde ein ringabschnittsförmiges und mehrere Primärteile 3 gleichzeitig überdeckendes Sekundärteil 1 mit Permanentmagneten 5 angedeutet. Hierbei könnte es sich um einen von mehreren voneinander beabstandeten Ringabschnitten oder um einen Ausschnitt eines vollständigen Sekundärteilringes 1 handeln. Die Erläuterungen zu Figur 4 treffen auch für diese Darstellung zu.

Aus dem beispielsweise für einen Rundtisch 2 geforderten Drehmoment und dem Radius r für diesen Rundtisch 2 kann die Kraft berechnet werden, welche erforderlich ist, um das zur Drehung des Rundtisches 2 erforderliche Drehmoment zu erzeugen. Aus dem Zusammenhang zwischen der geforderten Gesamtkraft und der Kraft, welche ein einziges Linearmotorteil 3 (Primärteil) erzeugen kann, kann die Anzahl der zum Betrieb der Anordnung erforderlichen Linearmotorteile 3 (Primärteile) ermittelt werden. Von diesem Ergebnis ist wiederum der Abstand zwischen den Linearmotorteilen 3 (Primärteile) auf der Kreisbahn abhängig.

Aus dem resultierenden Abstand kann der Kreissegmentwinkel a bestimmt werden, welcher auch in Figur 5 eingezeichnet ist. Der Abstand (Kreisbogenlänge) zwischen den Linearmotorteilen 3 ist definiert mittels zumindest zweier identischer Punkte auf unmittelbar benachbarten Linearmotorteilen 3 (Primärteile). Beispielsweise könnte die Bogenlänge von einer Zahnmitte (Zahn für eine Wicklung) auf einem ersten Linearmotorteil 3 bis zur einer an derselben Stelle angeordneten Zahnmitte auf dem zum ersten Linearmotorteil 3 unmittelbar benachbarten zweiten Linearmotorteil 3 gemessen werden. Alternativ könnten auch die anschlussseitigen Ränder der Linearmotorteile 3 verwendet werden, sofern diese in Bewegungsrichtung ausgerichtet sind.

Die Anzahl der erforderlichen Regelgeräte wird unter anderem abhängig von der erforderlichen Anzahl der Primärteile und deren Strombedarf ausgewählt. Möchte man jedoch Regelgeräte einsparen, so berücksichtigt man zusätzlich noch folgenden Sachverhalt bei der Dimensionierung der Anordnung: Jedes Linearmotorteil weist eine bestimmte Anzahl von Polen auf, welche mit der Polteilung τρ im wesentlichen gleich verteilt am Linearmotorteil realisiert sind (z.B. konzentrische Zahnwicklungen). Bezüglich des Kreisumfangs U, auf dem die Linearmotorteile angeordnet sind, der Anzahl der Polpaare p und der Polteilung τρ, besteht folgender Zusammenhang: U = 2 * τρ * p. Der Umfang errechnet sich aber ebenfalls aus dem Kreisradius r gemäß: U = 2 * Π * r. Somit gilt: τρ = (Π * r) : p. τρ beeinflusst auch die Regelgenauigkeit und die Betriebsbedingungen der Maschine.

Der Abstand identischer Linearmotorteile wird so gewählt, dass dieser Abstand im wesentlichen einem Vielfachen (n = 1,2,3,4, ...., n = ganze Zahl) von τρ entspricht (Gleichverteilung immer vorausgesetzt, gemessen beispielsweise von der Polmittelachse auf einem ersten Teil bis zur Polmittelachse desselben Zahnes auf einem zweiten Teil), wodurch weniger Regelgeräte benötigt werden, als wenn hierauf nicht geachtet wird (Ein Regelgerät behandelt dadurch mehrere Linearmotorteile wie eineinziges). Die Wahl identischer Linearmotorteile mit identischen elektrischen charakteristischen Größen führt zu einer gleichmäßigen Verteilung der Ströme auf alle vorhandenen Regelgeräte,

Bei einem ringförmigen Sekundärteil liegt stets - unabhängig von der Position - die gleiche aktive Fläche im Eingriff mit dem Primärteil und somit liefert es stets das unabhängig von der Lage im wesentliche selbe Drehmoment. Sollten gestaffelte Sekundärteile (zusammengefügte Einzelteile) im Eingriff sein, dann muss entweder durch die Anordnung der Sekundärteile und Primärteile realisiert werden, dass immer die gleiche aktive Fläche im Eingriff ist, oder der Regler muss die Drehmomentschwankungen aufgrund der schwankenden aktiven Fläche ausregeln.

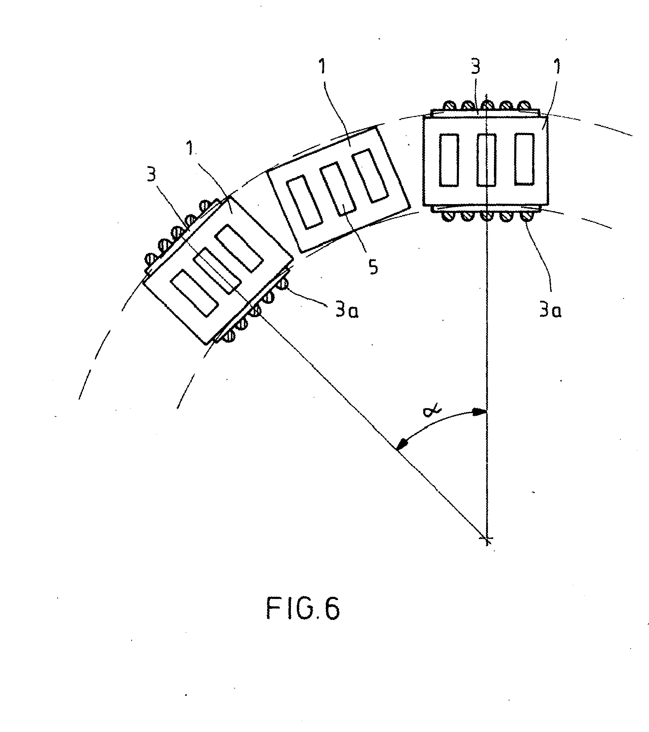

Die Figur 6 zeigt ebenfalls einen Detailausschnitt der aus der Figur 4 bereits bekannten schematischen Anordnung. Bei der in Figur 6 gezeigten Lösung wurden im Gegensatz zu der in Figur 5 gezeigten Lösung mehrere kürzere einzelne gerade Sekundärteile 1 ringabschnittsförmig angeordnet (gestaffelt), wobei jedes einzelne Sekundärteil 1 in etwa die Länge eines Primärteiles 3 mit Primärteilwicklungen 3a aufweist (es könnten auch leicht gebogene einzelne kurze Sekundärteile 2 verwendet werden). Die Erläuterungen zu Figur 4 treffen auch für diese Darstellung zu. Diese Lösung lässt sich preiswerter realisieren als die in Figur 5 gezeigte Lösung, da derartige Sekundärteile 2 Standardkomponenten sind, die bei Motorenherstellern in der Regel lagermäßig vorhanden sind oder vom Motorenhersteller in großen Stückzahlen preiswert erwerbbar sind.

In Figur 7 ist ein Rundtisch 2 gezeigt, wobei der Rundtisch 2 gleichzeitig als Linearmotorteilträger 2 fungiert. Alternativ könnte auch ein Linearmotorteilträgerteil 2 noch zusätzlich an der Rundtischunterseite angeordnet sein. Der Rundtisch 2, beziehungsweise das Linearmotorteilträgerteil 2, ist mittels einer Drehachse 6 um diese Achse drehbar gelagert (Wälzlager o.ä.). Ein oder mehrere am äußeren Umfang des Linearmotorteilträgerteils 2 angeordnete Linearmotorteile 1 (hier Sekundärteile 1 mit Permanentmagneten 5) können zusammen mit dem Rundtisch 2 um die Drehachse 6 rotieren. Unter anderem abhängig vom Abstand zwischen Linearmotorteil 1 und Drehachse 6 kann eine mehr oder weniger große Kraftkomponente umfangsseitig tangential in Drehrichtung an den Rundtisch 2 angreifen. Diese Kraft wird verursacht aus dem Zusammenwirken zwischen dem bereits erwähnten ersten Linearmotorteil 2 (hier Sekundärteile 2 mit Permanentmagneten 5) und dem ebenfalls in Figur 7 gezeigten zweiten Linearmotorteil 3 (hier Primärteil 3 mit Wicklungen 3a, siehe auch Figur 4). Wie ebenfalls aus Figur 7 deutlich erkennbar ist, sind beide Linearmotorteile 1, 3 im wesentlichen übereinander angeordnet, so dass der geometrische Mittelpunkt des aktiven Bereiches (nicht gezeigt) des Primärteiles 3 im wesentlichen auf derselben Kreisbahn (7a,b, Fig. 3) liegt, wie die mit der Bewegungsrichtung zusammenfallende Symmetrieachse (5a,b, Fig. 4) der Permanentmagnete 5 des Sekundärteils 1. Das zweite Linearmotorteil 3 (hier Primärteil 3 mit Wicklungen3a, siehe Figur 4) ist fest mit einem Maschinengehäuse 4 verbunden, welches hier gleichzeitig als Linearmotorteilträger 4 fungiert. Es könnte auch ein separater maschinenseitiger Linearmotorteilträger 4 als Anschlussflansch vorgesehen sein, welcher vor Inbetriebnahme der Vorrichtung zunächst mit dem Maschinengehäuse 4 verbunden werden muss. Dies hätte den Vorteil, dass der Antrieb als von der Maschine völlig unabhängige Komponente realisierbar wäre (vorausgesetzt auch der erste Linearmotorträger 2 ist wie weiter oben erwähnt als separates Teil realisiert). Beide Träger 2,4 sind dann erfindungsgemäß derart relativ zueinander angeordnet, dass eine erste ein Linearmotorteil 1 umfassende Linearmotorteilträgeroberfläche 2 einer zweiten ein Linearmotorteil 3 umfassenden Linearmotorteilträgeroberfläche 4 gegenüberliegend angeordnet ist. Eine Linearmotorteilträgeroberfläche streift somit im Falle der Rotation erfindungsgemäß permanent über die jeweils andere Linearmotorteilträgeroberfläche. Eine erste ortsveränderliche Linearmotorteilträgeroberfläche bildet somit einen Abtrieb für anzutreibende Vorrichtungen, während die gegenüberliegende ortsfeste Linearmotorteilträgeroberfläche einen Anschlussflansch zur Anordnung der Maschine an einem stabilen Untergrund bilden kann.

Mit der Erfindung ist es möglich die Vorschubkraft von Linearmotoren zur Realisierung von Rotationsbewegungen, beispielsweise zur Realisierung von Rundtischantrieben, zu nutzen. Somit sind keine Bewegungswandler erforderlich und mit Bewegungswandlern einhergehende Limitierungen, welche beispielsweise aufgrund mechanischer Kraftumlenkungen verursacht sein können (Schwingungen, Verschleiß, Krafteinbußen, etc.), können von vorneherein ausgeblendet werden.

Prinzipiell wäre es auch denkbar das erfindungsgemäße Prinzip nicht nur für Antriebe, sondern auch zur Realisierung von Generatoren mit großen Querschnitten zu verwenden.

## Patentansprüche

1. Einrichtung, insbesondere elektrische Maschine, insbesondere Synchron-Motor, insbesondere Synchron-Linearmotor, zur Erzeugung einer Rotationsbewegung, **dadurch gekennzeichnet, dass**
zumindest ein erstes Linearmotorteil (1) auf einer ersten Kreisbahn (7a) angeordnet ist und dass zumindest ein zweites Linearmotorteil (3) auf einer zweiten Kreisbahn (7b) angeordnet ist, wobei zumindest ein Linearmotorteil (1,3) relativ beweglich gegenüber dem jeweils anderen Linearmotorteil (3,1) angeordnet ist.

2. Einrichtung nach Anspruch 1, wobei zwei Linearmotorteilträger (2,4) umfasst sind, wobei zumindest ein erstes Linearmotorteil (1) auf einem ersten Linearmotorteilträger (2) angeordnet ist und wobei ein zweites Linearmotorteil (3) auf einem zweiten Linearmotorteilträger (4) angeordnet ist, wobei zumindest einer der Linearmotorteilträger (2,4) derart relativ beweglich gegenüber dem jeweils anderen Linearmotorteilträger (4,2) angeordnet ist, dass die das erste Linearmotorteil (1) umfassende erste Linearmotorteilträgeroberfläche der das zweite Linearmotorteil (3) umfassenden zweiten Linearmotorteilträgeroberfläche zumindest teilweise zugewandt ist.

3. Einrichtung nach Anspruch 2, wobei beide Linearmotorteilträger (2,4) flächig, vorzugsweise kreisförmig, ausgebildet sind, und einen gemeinsamen geometrischen Mittelpunkt aufweisen, wobei an diesem geometrischen Mittelpunkt eine Drehachse (6) für den beweglich gelagerten Linearmotorteilträger (2,4) vorgesehen ist.

4. Einrichtung nach einem der vorhergehenden Ansprüche, wobei das erste Linearmotorteil (1) und das zweite Linearmotorteil (3) jeweils im wesentlichen rechteckförmig ausgebildet sind.

5. Einrichtung nach einem der vorhergehenden Ansprüche 1 bis 3, wobei das erste Linearmotorteil (1) im wesentlichen ringförmig oder im wesentlichen als Ringabschnitt und das zweite Linearmotorteil (3) im wesentlichen rechteckförmig ausgebildet sind.

6. Einrichtung nach einem der vorhergehenden Ansprüche 1 bis 3, wobei das erste Linearmotorteil (1) im wesentlichen rechteckförmig und das zweite Linearmotorteil (3) im wesentlichen ringförmig oder im wesentlichen als Ringabschnitt ausgebildet sind.

7. Einrichtung nach einem der vorhergehenden Ansprüche 1 bis 3, wobei das erste Linearmotorteil (1) und das zweite Linearmotorteil (3) jeweils im wesentlichen ringförmig oder im wesentlichen als Ringabschnitt ausgebildet sind.

8. Einrichtung nach einem der vorhergehenden Ansprüche, wobei das erste Linearmotorteil (1) einen elektrisch aktiven Bereich umfasst und wobei das zweite Linearmotorteil (3) elektrisch passiv ist und magnetische Pole (5), vorzugsweise realisiert mittels Permanentmagneten (5), umfasst.

9. Einrichtung nach einem der vorhergehenden Ansprüche, wobei entlang zumindest einer Kreisbahn (7a, 7b) mehrere Linearmotorteile (1,3) jeweils paarweise im wesentlichen diametral angeordnet sind.

10. Einrichtung nach einem der vorhergehenden Ansprüche 8 bis 9, wobei der geometrische Mittelpunkt des vorzugsweise im wesentlichen rechteckigförmigen elektrisch aktiven Bereiches (6) auf der Kreisbahn (7a, 7b) liegt.

11. Einrichtung nach einem der vorhergehenden Ansprüche, wobei eine gerade oder ungerade Anzahl von Linearmotorteilen (1,3) an einem Linearmotorteilträger (2,4) vorgesehen sind.

12. Einrichtung nach einem der vorhergehenden Ansprüche 8 bis 11, wobei die Polteilung τρ unter Berücksichtigung der Kreisbahn (7a, 7b), auf welcher der geometrische Mittelpunkt des elektrisch aktiven Bereiches liegt, dimensioniert ist.

13. Einrichtung nach einem der vorhergehenden Ansprüche umfassend einen Pollagesignalgeber (10) zur Realisierung einer Selbststeuerung mittels Feldführung, welcher pro 360 Grad elektrisch eine Anzahl von wenigstens 3, vorzugsweise jedoch aber 10 oder mehr, Impulse pro vorhandenem Polpaar p liefert.

14. Vorrichtung für eine Werkzeugmaschine, insbesondere Rundtisch (2) oder Drehtisch (2), mit als elektrischer Antrieb konzipierter Einrichtung nach einem der vorhergehenden Ansprüche, wobei insbesondere Mittel zur Anordnung der Vorrichtung an der Werkzeugmaschine.

15. Werkzeugmaschine mit Vorrichtung nach Anspruch 14.

16. Verfahren zur Herstellung einer Einrichtung zur Realisierung einer Rotationsbewegung mit folgenden Verfahrensschritten:
a) Definition einer ersten Kreisbahn (7a) auf einer ersten Linearmotorteilträgeroberfläche eines ersten Linearmotorteilträgers (2,4) und Anordnung zumindest eines ersten Linearmotorteiles (1,3) auf dieser ersten Kreisbahn (7a) am ersten Linearmotorteilträger (2,4).
b) Definition einer zweiten Kreisbahn (7b) auf einer zweiten Linearmotorteilträgeroberfläche eines zweiten Linearmotorteilträgers (2,4) und Anordnung zumindest eines zum ersten Linearmotorteil (1,3) korrespondierenden zweites Linearmotorteiles (3,1) auf dieser zweiten Kreisbahn (7b) am zweiten Linearmotorteilträger (2,4).
c) Anordnung beider Linearmotorteilträgerteile (2,4) relativ derart zueinander, dass die das erste Linearmotorteil (1) umfassende erste Linearmotorteilträgeroberfläche des ersten Linearmotorteilträgers (2,4) der das zweite Linearmotorteil (3) umfassenden zweiten Linearmotorteilträgeroberfläche des zweiten Linearmotorteilträgers (4,2) zugewandt ist und zumindest ein Linearmotorteilträger (2,4) beweglich um eine Drehachse (6) angeordnet wird.

17. Verfahren nach Anspruch 16, wobei entlang der ersten oder der zweiten Kreisbahn (7a, 7b) mehrere erste Linearmotorteile (1) oder mehrere zweite Linearmotorteile (3) jeweils paarweise im wesentlichen diametral angeordnet werden.

18. Verfahren nach einem der vorhergehenden Ansprüche 16 und 17, wobei ein Linearmotorteil (1,3) einen elektrisch aktiven Bereich umfasst, wobei der geometrische Mittelpunkt des vorzugsweise im wesentlichen rechteckigförmigen elektrisch aktiven Bereiches auf einer Kreisbahn (7a, 7b) angeordnet wird.

19. Verfahren nach einem der Ansprüche 16 bis 18, wobei der Polabstand τρ unter Berücksichtigung der Kreisbahn (7a, 7b), auf welcher der geometrische Mittelpunkt des elektrisch aktiven Bereiches liegt, dimensioniert wird.

20. Verfahren nach einem der Ansprüche 16 bis 19, wobei die Linearmotorteile (1,3) mit einem Schutzmittel, beispielsweise mit einer Abdeckvorrichtung oder mit einer Vergussmasse, gegen äußere Umgebungseinflüsse versehen werden.

21. Verfahren nach einem der vorhergehenden Ansprüche 16 bis 20, wobei die Einrichtung als Synchron-Motor, insbesondere als Synchron-Linearmotor, realisiert wird.

22. Verfahren nach einem der vorhergehenden Ansprüche 16 bis 21, wobei die Einrichtung an einem Rundtisch (2) für eine Werkzeugmaschine angeordnet wird.

23. Verfahren nach Anspruch 22, wobei der Rundtisch (2) an einer Werkzeugmaschine angeordnet wird.

24. Verfahren zur Herstellung eines Rundtisches gemäß einem Verfahren nach einem der Ansprüche 16 bis 22 unter Verwendung einer Einrichtung gemäß einem der Ansprüche 1 bis 13.

25. Verfahren zur Herstellung einer Werkzeugmaschine mit unter Verwendung eines gemäß einem Verfahren nach Anspruch 24 hergestellten Rundtisches.

26. Verfahren nach einem der vorhergehenden Ansprüche 16 bis 20, wobei die Einrichtung als Generator realisiert wird.
